# EUROPÄISCHE PATENTSCHRIFT

(11) **EP 3 616 946 B1**
(45) Veröffentlichungstag und Bekanntmachung des Hinweises auf die Patenterteilung: **26.05.2021**
(21) Anmeldenummer: 19188734.8
(22) Anmeldetag: 29.07.2019
(51) Int. Cl.: B60C 11/24, B60C 11/13

(54) **FAHRZEUGLUFTREIFEN**
PNEUMATIC TYRE
PNEUMATIQUES DE VÉHICULE

(30) Priorität: 31.08.2018 DE 102018214841
(43) Veröffentlichungstag der Anmeldung: 04.03.2020
(73) Patentinhaber: Continental Reifen Deutschland GmbH, 30165 Hannover (DE)
(72) Erfinder: Lacko, Peter, 30165 Hannover (DE); Lacko, Michal, 30165 Hannover (DE)
(74) Vertreter: Continental Corporation

(56) Entgegenhaltungen:
- EP-A1- 2 113 400
- EP-A1- 3 015 291
- DE-A1-102008 024 075
- DE-A1-102009 003 592
- DE-A1-102015 225 941

## Beschreibung

Die Erfindung betrifft einen Fahrzeugluftreifen mit einem Laufstreifen mit auf Profiltiefe ausgeführten Rillen, beispielsweise Umfangsrillen, Schrägrillen oder Querrillen, welche jeweils durch einen Rillengrund und zwei Rillenflanken begrenzt sind, wobei in zumindest einer Rille am Rillengrund eine an beide Rillenflanken angebundene, einen Abriebindikator bildende Erhebung vorgesehen ist.

Es ist üblich, in auf Profiltiefe ausgeführten Rillen, insbesondere in Umfangsrillen, von Laufstreifen von Fahrzeugluftreifen Abriebindikatoren, welche das Erreichen der gesetzlich vorgeschriebenen Mindestprofiltiefe anzeigen, vorzusehen. Abriebindikatoren sind in einer Vielzahl von Ausgestaltungen bekannt, insbesondere befassen sich auch Patente und Patentanmeldung mit speziellen Ausgestaltungen von Abriebindikatoren.

Ein Fahrzeugluftreifen der eingangs genannten Art ist beispielsweise aus der DE 10 2008 024 075 A1 bekannt. Der Laufstreifen dieses Fahrzeugluftreifens weist zumindest eine Umfangsrille auf, in welcher mindestens eine an beide Rillenflanken angebundene, einen Abriebindikator bildende Erhebung vorgesehen ist. Die Erhebung setzt sich in axialer Richtung aus Indikatorteilen zusammen, welche zumindest drei in unterschiedlichem Abstand zum Rillengrund befindliche, in Draufsicht unterschiedliche Größen und/oder Formen aufweisende Indikatorflächen zur Verfügung stellen. Diese Ausgestaltung ermöglicht ein leichtes Erkennen des jeweiligen Abriebzustandes des Laufstreifens in mehreren Stufen.

Ein weiterer Fahrzeugluftreifen der eingangs genannten Art, welcher ein Nutzfahrzeugreifen ist, ist aus der EP 2 790 930 B1 bekannt. Der Laufstreifen dieses Reifens ist mit einer Anzahl von Umfangsrillen versehen, auf deren Rillengrund als Abriebindikatoren bildende Erhebungen angeordnet sind, die sich quer durch die Umfangsrillen erstrecken und daher mit beiden Rillenflanken verbunden sind.

Aus der DE 10 2009 003 592 A1 ist ein Fahrzeugluftreifen mit einem Laufstreifen mit zumindest einer Umfangsrille, auf deren Rillengrund eine Vielzahl von in Umfangsrichtung aufeinanderfolgenden, als Schallbrecher wirkende Erhebungen ausgebildet ist, bekannt. Gemäß einem Ausführungsbeispiel weist jede Erhebung drei in axialer Richtung aneinander grenzende Erhebungsabschnitte auf, welche sich jeweils mit der Kontur einer kreiszylindrischen Mantelfläche erheben, wobei die kreiszylindrische Mantelfläche der beiden äußeren Erhebungsabschnitte einen größeren Radius aufweist als die kreiszylindrische Mantelfläche des mittleren Erhebungsabschnittes. Gemäß einem weiteren Ausführungsbeispiel ist auf einem der seitlichen Erhebungsabschnitte eine einen Abriebindikator bildende, in Draufsicht quadratische Platte mit einer Dicke von 0,5 mm bis 1,0 mm und einer Kantenlänge von 2,0 mm bis 5,0 mm ausgebildet, welche mit einem kreuzförmigen Einschnitt versehen ist, der das Erreichen einer bestimmen Profiltiefe anzeigt. Bei einem dritten Ausführungsbeispiel ist auf dem mittleren Erhebungsabschnitt als Abriebindikator eine kreuzförmige Erhebung ausgebildet.

Die DE 10 2015 225 941 A1 offenbart einen weiteren Fahrzeugluftreifen mit einem Laufstreifen mit einer Umfangsrille, auf deren Rillengrund eine Anzahl von als Schallbrecher wirkenden Erhebungen ausgebildet ist. Die Erhebungen weisen jeweils einen mittig am Rillengrund positionierten, kreiszylindrischen Basisteil auf, vom welchem strahlenförmig vier Stabilisierungsstege entlang des Rillengrundes verlaufen, wobei jeweils zwei Stabilisierungsstege einander diametral gegenüberliegen. Die Erhebungen sind besonders stabil und weisen ein im Hinblick auf das Wasserdrainagevermögen der Umfangsrille vorteilhaftes kleines Volumen auf.

Ferner ist aus der EP 3 015 291 A1 ein Fahrzeugluftreifen mit einem Laufstreifen mit einer Umfangsrille, in welcher zumindest eine einen Abriebindikator bildende Erhebung ausgebildet ist, bekannt. Die Erhebung weist einen plattenförmigen, radial innersten Indikatorteil, einen auf diesem befindlichen mittigen Indikatorteil und einen auf dem mittigen Indikatorteil befindlichen radial äußersten Indikatorteil auf. Die Indikatorteile weisen parallel zur Laufstreifenperipherie verlaufend Indikatorflächen auf, wobei die Indikatorfläche des radial innersten Indikatorteiles am größten und jene des radial äußersten Indikatorteiles am kleinsten ist. Zumindest der radial innerste Indikatorteil ist an die eine Rillenflanke der Umfangsrille angebunden. Ein derart gestalteter Abriebindikator ist rissbeständig und strömungsgünstig.

Ferner ist aus der EP 2 133 400 A1 ein Fahrzeugluftreifen mit einem Laufstreifen bekannt, welcher zumindest eine Umfangsrille aufweist, an deren Rillengrund zumindest ein als Erhebung ausgebildeter Abriebindikator vorgesehen ist. Die axiale Breite der Erhebung entspricht höchstens 50% der Breite der Umfangsrille. Auf der Deckfläche der Erhebung ist eine erhabene Struktur ausgebildet, nach deren Abrieb die Mindestprofiltiefe erreicht ist. Die Erhebung kann an eine der Rillenflanken angebunden oder mittig in der Umfangsrille und daher freistehend ausgebildet sein.

Insbesondere bei Nutzfahrzeugreifen sind die Abriebindikatoren häufig simple quaderförmige Erhebungen am Rillengrund, welche abgerundete Kanten und Ecken aufweisen. Derart gestaltete Abriebindikatoren sind infolge ihrer exponierten Ecken und Kanten anfällig für das Entstehen von Rissen, insbesondere können sich in die beim Abrollen des Reifens in die Rillen eingeleiteten Spannungen an solchen Erhebungen leicht konzentrieren und derart das Bilden von Rissen begünstigen.

Der Erfindung liegt daher die Aufgabe zugrunde, einfach gestaltete, am Rillengrund von Rillen ausgebildete Abriebindikatoren, insbesondere für Nutzfahrzeugreifen, zur Verfügung zu stellen, die nicht rissanfällig und wesentlich besser erkennbar sind, als die üblichen Abriebindikatoren.

Gelöst wird die gestellte Aufgabe erfindungsgemäß dadurch, dass die Erhebung einen in Draufsicht und in Erstreckungsrichtung der Rille aufrecht H-förmigen, seitliche Schenkel und einen diese verbindende Verbindungsschenkel aufweisenden Indikatorteil aufweist, wobei die seitlichen Schenkel an die Rillenflanken angebunden sind und wobei der Verbindungsschenkel durch zwei in Draufsicht zueinander konkav gebogen verlaufende Verbindungsflächen begrenzt ist.

Der erfindungsgemäß gestaltete, beidseitig an die Rillenflanken angebundene H-förmige Indikatorteil ist auf vorteilhafte Weise abgestützt und kann sich bei auftretenden Spannungen durch die zueinander konkav gebogen verlaufenden Verbindungsflächen soweit flexibel verformen, dass keine oder kaum mehr Risse entstehen. Die H-Gestalt des Indikatorteiles ist auffällig und begünstigt daher die Erkennbarkeit des Abriebindikators.

Gemäß einer bevorzugten Ausführungsvariante weist die Erhebung in Fortsetzung der seitlichen Schenkel der H-Form des Indikatorteiles paarweise verlaufende und in Richtung zum Rillengrund auslaufende Stützschenkel auf. Die Stützschenkel verbessern die Sichtbarkeit der Erhebung und erhöhen die Rissbeständigkeit des Indikatorteiles, da über die Stützschenkel in den heiklen Übergangsbereichen zwischen den seitlichen Schenkeln und den Rillenflanken auftretende Spannungen wirkungsvoll zum Rillengrund abgeleitet werden können.

Gemäß einer weiteren bevorzugten Ausführungsvariante verläuft zumindest eine der Verbindungsflächen des Verbindungsschenkels des H-förmigen Indikatorteiles in Draufsicht U-förmig. Diese Maßnahme trägt einerseits dazu bei, dass auch im Bereich des Verbindungsschenkels etwaige Spannungen gut abgleitet werden und ermöglicht einen verwirbelungsarmen Durchfluss von Wasser durch die Rille.

In diesem Zusammenhang ist es auch Vorteil, wenn zumindest eine der Verbindungsflächen des Verbindungsschenkels des H-förmigen Indikatorteiles in Draufsicht kreisbogenförmig, insbesondere höchstens halbkreisförmig, verläuft.

Gemäß einer weiteren bevorzugten Ausführungsvariante weist der H-förmige Indikatorteil eine mit der Mindestprofiltiefe korrelierende, insbesondere konstante Höhe auf.

Für die Sichtbarkeit und die Stabilität der Erhebung ist es von Vorteil, wenn der Verbindungsschenkel des H-förmigen Indikatorteiles an seiner schmalsten Stelle, am Niveau des Rillengrundes, in Erstreckungsrichtung der Rille eine Dicke von 5,0 mm bis 15,0 mm aufweist.

Gemäß einer weiteren bevorzugten Variante weist der H-förmige Indikatorteil bei jeder Rillenflanke in Erstreckungsrichtung der Rille eine Erstreckungslänge von 15,0 mm bis 40,0 mm auf. Ein derart gestalteter Indikatorteil ist gut erkennbar.

Es ist ferner bevorzugt, wenn die Stützschenkel am Niveau des Rillengrundes und in Erstreckungsrichtung der Rille eine Erstreckungslänge aufweisen, welche 75% bis 150% der Erstreckungslänge des Indikatorteiles bei der jeweiligen Rillenflanke entspricht. Auf diese Weise unterstützen die Stützschenkel eine gute Erkennbarkeit des Abriebindikators.

Gemäß einer weiteren bevorzugten Ausführung verläuft zwischen den beiden Paaren von Stützschenkeln ein bis zum H-förmige Indikatorteil reichender Grundabschnitt des Rillengrundes, welcher beim Anschluss des Indikatorteiles zu den Stützschenkeln eine Breite von 15% bis 45%, insbesondere von 20% bis 30%, der Breite des H-förmigen Indikatorteiles zwischen den Rillenflanken aufweist. Ein Grundabschnitt mit dieser Breite trägt dazu bei, eine Spannungskonzentration im Bereich der Erhebung zu vermindern.

Gemäß einer weiteren bevorzugten Ausführung weist zumindest einer der Grundabschnitte über seine Erstreckung eine konstante Breite auf. Alternativ nimmt die Breite von zumindest einem der Grundabschnitte in Richtung zu den freien Enden der Stützschenkel kontinuierlich ab oder zu. Bei abnehmender Breite sind die Stützschenkel rilleninnseitig gut stabilisiert, bei zunehmender Breite ist insbesondere die Wasserdrainage durch die Rille begünstigt. Eine konstante Breite liefert in dieser Hinsicht entsprechend ausgewogene Eigenschaften.

Bevorzugter Weise sind die Stützschenkel rilleninnenseitig durch Seitenflächen begrenzt, welche in Draufsicht zur Erstreckungsrichtung der Rille unter einem Winkel von bis zu 20°, insbesondere von 2° bis 10°, geneigt sind.

Weitere Merkmale, Vorteile und Einzelheiten der Erfindung werden nun anhand der Zeichnung, die schematisch Ausführungsbeispiele der Erfindung zeigt, näher beschrieben.

### Dabei zeigen

Fig. 1 eine Ansicht eines Abschnittes einer Umfangsrille eines Laufstreifens eines Fahrzeugluftreifens mit einer Ausführungsvariante eines Abriebindikators,
Fig. 2 bis Fig. 7 in Draufsicht Prinzipdarstellungen weiterer Ausführungsvarianten von Abriebindikatoren.

Gemäß der Erfindung ausgeführte Reifen sind Fahrzeugluftreifen in Radialbauart, insbesondere für Nutzfahrzeuge, Vans oder Light-Trucks.

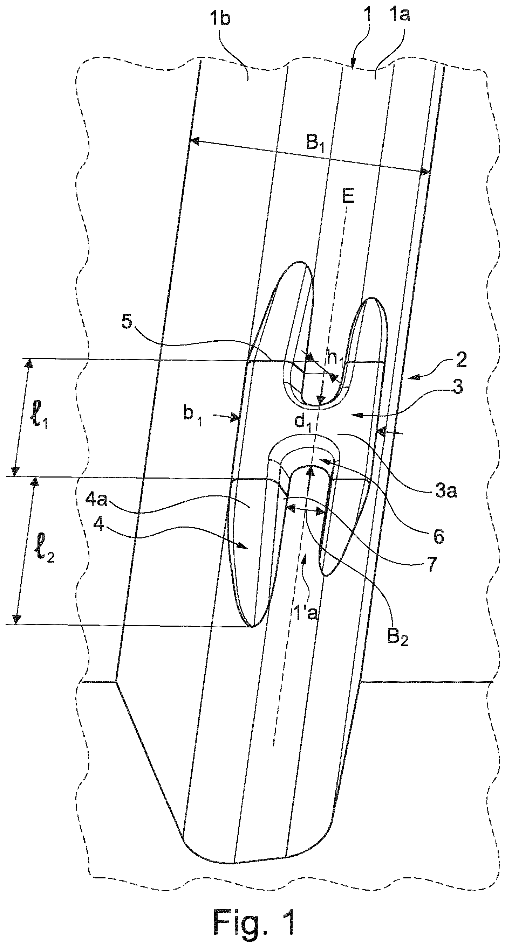

Fig. 1 zeigt eine Schrägansicht auf einen Abschnitt einer Umfangsrille 1 eines Laufstreifens eines Fahrzeugluftreifens im Bereich einer in einer Umfangsrille 1 positionierten, einen Abriebindikator bildenden Erhebung 2. In der Umfangsrille 1 können mehrere Erhebungen 2 ausgebildet sein, welche die üblichen Abstände voneinander aufweisen.

Die Umfangsrille 1 ist durch einen Rillengrund 1a und zwei Rillenflanken 1b begrenzt und weist die für den jeweiligen Reifentyp vorgesehene Profiltiefe auf, welche bei Nutzfahrzeugreifen üblicherweise 12,0 mm bis 26, 0mm und bei Reifen für Vans und Light Trucks üblicherweise 6,5 mm bis 13,0 mm beträgt. Zwischen den radial äußeren Enden der Rillenflanken 1b weist die Umfangsrille 1 in axialer Richtung eine Breite B₁ auf, welche bei Nutzfahrzeugreifen insbesondere 10,0 mm bis 25,0 mm und bei Vans oder Light-Trucks insbesondere 6,0 mm bis 8,0 mm beträgt.

Die Erhebung 2 befindet sich auf dem Rillengrund 1a, grenzt an jede Rillenflanke 1b an und ist in Draufsicht in Umfangsrichtung insgesamt langezogen H-förmig gestaltet, sodass die parallel zueinander ausgerichteten seitlichen Schenkel der H-Form der Erhebung 2 an die Rillenflanken 1b anschließen und mit diesen verbunden sind.

Die Erhebung 2 setzt sich aus einem seitlich an beide Rillenflanken 1b angebundenen, in Draufsicht in Umfangsrichtung H-förmigen Indikatorteil 3 mit zwei seitlichen Schenkeln und einem zwischen diesen mittig verlaufenden Verbindungsschenkel und zwei Paaren von länglichen Stützschenkeln 4 zusammen. Die Stützschenkel 4 schließen an den Enden der seitlichen Schenkel des Indikatorteiles 3 an, verlaufen in Fortsetzung der Schenkel des Indikatorteiles 3 in Erstreckungsrichtung der Umfangsrille 1 entlang des Rillengrundes 1a unter kontinuierlicher Verringerung ihrer Höhe und laufen am Rillengrund 1a aus.

Der Indikatorteil 3 ist bezüglich der in Fig. 1 durch eine gestrichelte Linie angedeuteten Mittelebene E der Umfangsrille 1 - im dargestellten Abschnitt - symmetrisch ausgeführt, wobei die Mittelebene E bei übereinstimmend zur radialen Richtung geneigten Rillenflanken 1b zu den Rillenflanken 1b gleich große Abstände aufweist. Der Indikatorteil 3 weist gegenüber dem Niveau des Rillengrundes 1a in radialer Richtung eine konstante Höhe h₁ auf und ist in der Höhe h₁ durch eine parallel zum Rillengrund 1a und zur nicht bezeichneten Laufstreifenperipherie ausgerichtete Deckfläche 3a begrenzt. Die Höhe h₁ ist derart gewählt, dass sich die Deckfläche 3a auf dem Niveau der gesetzlich vorgeschriebenen Mindestprofiltiefe des jeweiligen Reifentyps befindet. Der Verbindungsschenkel des Indikatorteiles 3 ist durch zwei sich bis zu den Stützschenkeln 4 erstreckende, in Draufsicht zueinander konkav gebogenen, in Fig. 1 U-förmigen Verbindungsflächen 6 begrenzt. Der Indikatorteil 3 weist ferner an jeder Rillenflanke 1b in Umfangsrichtung eine Erstreckungslänge I₁ von 15,0 mm bis 40,0 mm, entlang der Mittelebene E₁ am Niveau des Rillengrundes 1 seine schmalste Stelle mit eine Dicke d₁ von 5,0 mm bis 15,0 mm und an seiner Deckfläche 3a zwischen den Rillenflanken 1b in axiale Richtung eine Breite b₁ auf. Die jeweilige Breite b₁ des Indikatorteiles 3 an der Deckfläche 3a ergibt sich aus den Abmessungen der Umfangsrille 1, der Orientierung der Rillenflanken 1b zur radialen Richtung sowie der Höhe h₁ des Indikatorteiles 3.

Zwischen jedem Paar von Stützschenkeln 4 verläuft jeweils ein Grundabschnitt 1'a des Rillengrundes 1a, welcher beim H-förmigen Indikatorteil 3 endet und in axialer Richtung, zwischen den Stützschenkeln 4, eine konstante Breite B₂ von 15% bis 45%, insbesondere von 20% bis 30%, der Breite b₁ des Indikatorteiles 3 aufweist.

Jeder Stützschenkel 4 weist eine gegenüber der Laufstreifenperipherie insbesondere um 10° bis 30° geneigte, zum Rillengrund 1a abfallende und an diesem auslaufende Deckfläche 4a auf, welche in der Höhe h₁ über eine Knickstelle 5 an die Deckfläche 3a des Indikatorteiles 3 anschließt bzw. in diese übergeht. Durch die Knickstellen 5 ist der Indikatorteil 3 gegenüber den Stützschenkeln 4 auf gut sichtbare Weise abgegrenzt. Anstelle der Knickstellen 5 können Übergangsrundungen vorgesehen sein. Beim gezeigten Ausführungsbeispiel sind die bei der in Fig. 1 linken Rillenflanke 1b verlaufenden Stützschenkel 4 in Umfangsrichtung etwas länger ausgeführt als die in Fig. 1 bei der rechten Rillenflanke 1b ausgebildeten Stützschenkel 4.

Jeder Stützschenkel 4 ist zur Mitte der Umfangsrille 1 durch eine von seiner Deckfläche 4a zum Grundabschnitt 1'a verlaufende Seitenfläche 7 begrenzt, welche in Fortsetzung der U-förmigen Verbindungsflächen 6 sowie in Umfangsrichtung verläuft. Die Stützschenkel 4 weisen am Niveau des Rillengrundes 1a in Richtung der Erstreckung der Umfangsrille 1 eine Erstreckungslänge l₂ auf, welche 75% bis 150% der Erstreckungslänge l₁ des Indikatorteiles 3 entspricht.

Die Übergänge von den Verbindungsflächen 6 zu den Deckflächen 3a und 4a sowie die Übergänge von den Seitenflächen 7 zu den Deckflächen 3a und 4a sind, wie es bei Gummibauteilen üblich ist, abgerundet ausgeführt.

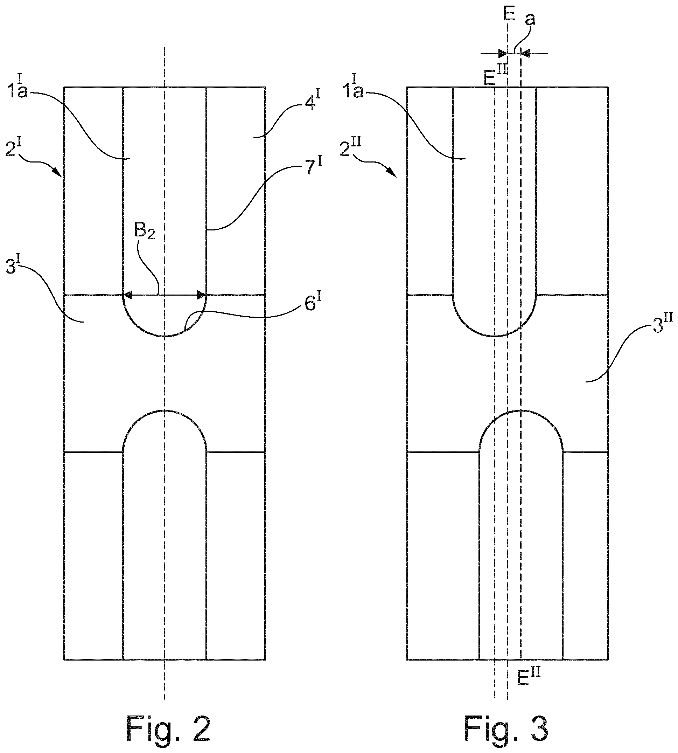

Fig. 2 bis Fig. 7 zeigen Prinzipdarstellungen von Draufsichten auf weitere gemäß der Erfindung ausgeführte Erhebungen 2^{I} bis 2^{VI} mit H-förmigen Indikatorteilen. Die Erhebungen 2^{II} bis 2^{VI} sind Varianten der Erhebung 2^{I}, sodass die jeweils zur Erhebung 2^{I} übereinstimmend ausgeführten Teile der Erhebungen 2^{II} bis 2^{VI} mit denselben Bezugsziffern wie die Erhebung 2^{I} versehen sind. Die Bezugnahmen auf die Umfangsrille 1 sowie auf die Mittelebene E beziehen sich auf in einer Umfangsrille 1 (siehe Fig. 1) ausgebildete Erhebungen 2^{II} bis 2^{VI}. Die Mittelebene E des jeweiligen Abschnittes der Umfangsrille 1 ist jeweils durch eine gestrichelte Linie angedeutet.

Fig. 2 zeigt eine Erhebung 2^{I}, welche bezüglich der Mittelebene E symmetrisch gestaltet ist, aus einem in Draufsicht H-förmigen mittleren Indikatorteil 3^{I} und vier beispielhaft gleich lang ausgeführten in Fortsetzung der seitlichen Schenkel des Indikatorteiles 3^{I} verlaufenden Stützschenkeln 4^{I} besteht, die auch analog zu den Stützschenkeln 4 ausgeführt sein können. Die gegensinnig zueinander orientierten Verbindungsflächen 6^{I} am Verbindungsschenkel des Indikatorteiles 3^{I} sind in Draufsicht halbkreisförmig gebogen. Zwischen den Paaren von Stützschenkeln 4^{I} verläuft je ein Grundabschnitt 1^{I}a des Rillengrundes der Umfangsrille. Die Stützschenkel 4^{I} weisen Seitenflächen 7^{I} auf, welche an die Enden der halbkreisförmig gebogenen Verbindungsflächen 6^{I} anschließen und in Draufsicht in Umfangsrichtung verlaufen. Zwischen den Enden jeder Verbindungsfläche 6^{I} weist der Grundabschnitt 1^{I}a eine Breite B₂ von 15% bis 45%, insbesondere von 20% bis 30%, der Breite B₁ der Umfangsrille 1 auf.

Die in Fig. 3 gezeigte Erhebung 2^{II} unterscheidet sich von der Erhebung 2^{I} dadurch, dass die Mittellinien E^{II} der beiden Grundabschnitte 1^{I}a bezüglich der Mittelebene E in zueinander entgegengesetzte Richtungen, insbesondere um einen Abstand a von 1,0 mm bis 5,0 mm, versetzt sind. Dadurch weist die Erhebung 2^{II} einen bezüglich der Mittelebene E asymmetrischen H-förmigen Indikatorteil 3^{II} auf und die zu einem Paar gehörenden Stützschenkel sind ungleich breit.

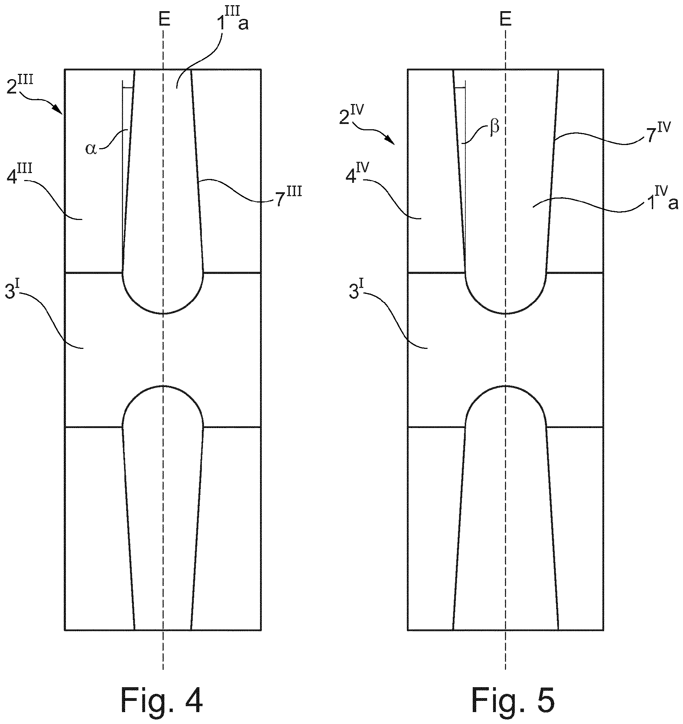

Fig. 4 zeigt eine Erhebung 2^{III}, die bezüglich der Mittelebene E symmetrisch ist und einen Indikatorteil 3^{I} aufweist, welcher jenem gemäß Fig. 2 entspricht. Die Erhebung 2^{III} weist Stützschenkel 4^{III} auf, welche rilleninnenseitig durch Seitenflächen 7^{III} begrenzt sind. Die Seitenflächen 7^{III} sind in Draufsicht zur Mittelebene E unter einem Winkel α von bis zu 20°, insbesondere von 2° bis 10°, geneigt, dass sie sich die Stützschenkel 4^{III} zu ihren Enden kontinuierlich verbreitern. Die Grundabschnitte 1^{III}a zwischen den Paaren von Stützschenkeln 4^{III} weisen daher, ausgehend vom Indikatorteil 3^{I}, eine zu den freien Enden der Stützschenkeln 4^{III} abnehmende Breite auf.

Fig. 5 zeigt eine Erhebung 2^{IV}, welche ebenfalls bezüglich der Mittelebene E symmetrisch ausgeführt ist und einen Indikatorteil 3^{I} aufweist, welcher jenem gemäß Fig. 2 entspricht. Die Stützschenkel 4^{IV} sind rilleninnenseitig durch Seitenflächen 7^{IV} begrenzt, welche derart zur Mittelebene E unter einem Winkel β von bis zu 20°, insbesondere von 2° bis 10°, geneigt sind, dass sie zu ihren freien Enden kontinuierlich schmaler werden und der Grundabschnitt 1^{IV}a, welcher jeweils zwischen einem Paar von Stützschenkeln 4^{IV} verläuft, ausgehend vom Indikatorteil 3^{I} in Richtung zu den freien Enden der Stützschenkel 4^{IV} eine zunehmende Breite aufweist.

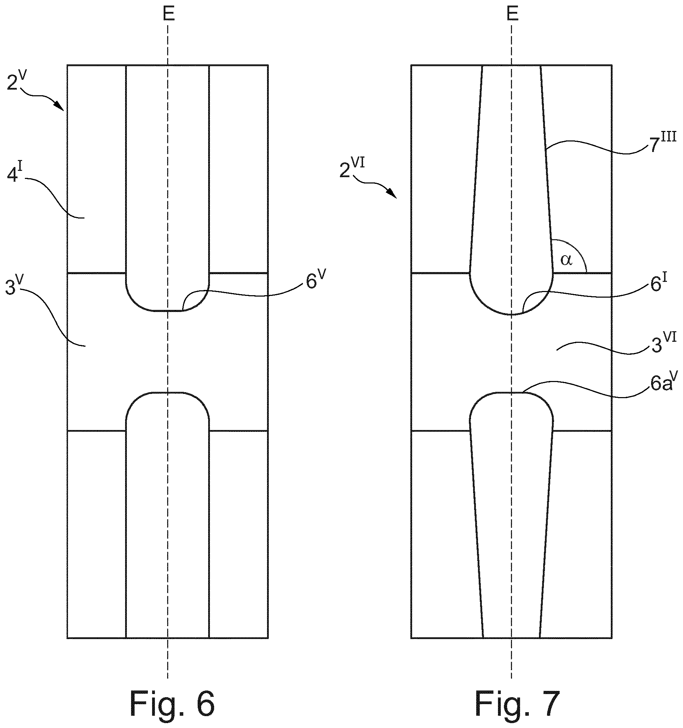

Fig. 6 zeigt eine Erhebung 2^{V}, welche ebenfalls bezüglich der Mittelebene E symmetrisch gestaltet ist und einen Indikatorteil 3^{V} und Stützschenkel 4^{I}, welche jenen gemäß Fig. 2 entsprechen, aufweist. Der Verbindungsschenkel des Indikatorteiles 3^{V} ist durch in Draufsicht U-förmige Verbindungsflächen 6^{V} begrenzt.

Fig. 7 zeigt eine Erhebung 2^{VI}, welche eine Kombination aus bereits beschriebenen Ausführungsvarianten ist. Der Erhebung 2^{VI} weist einen Indikatorteil 3^{VI} auf, dessen Verbindungsschenkel in der einen Umfangsrichtung durch eine in Draufsicht U-förmige Verbindungsfläche 6^{V} und in der anderen Umfangsrichtung durch eine in Draufsicht halbkreisförmig gerundete Verbindungsfläche 6^{I} begrenzt ist. Die Stützschenkel 4^{III} sind rilleninnenseitig zur Ebene E mit unter einem Winkel α geneigten Seitenflächen 7^{III} versehen, analog zur Ausführung gemäß Fig. 4.

Die Erfindung ist auf die beschriebenen Ausführungsvarianten nicht beschränkt.

Insbesondere können die beschriebenen Varianten beliebig miteinander kombiniert werden. Ferner kann die einen Abriebindikator bildende Erhebung in beliebigen auf Profiltiefe ausgeführten Rillen, beispielsweise in Schräg- oder Querrillen, des Laufstreifens ausgebildet sein.

### Bezugszeichenliste

- 1 ...............................: Umfangsrille
- 1a .............................: Rillengrund
- 1'a, 1^{I}a, 1^{III}a, 1^{IV}a .....: Grundabschnitt
- 1b .............................: Rillenflanke
- 2, 2^{I bis VI} ...................: Erhebung
- 3, 3^{I}, 3^{II}, 3^{V} ... ...........: Indikatorteil
- 3a .............................: Deckfläche
- 4, 4^{I}, 4^{III}....................: Übergansteil
- 4a .............................: Deckfläche
- 5 ...............................: Knickstelle
- 6, 6^{I}, 6^{V}: Verbindungsfläche
- 7, 7^{I}, 7^{III}, 7^{IV} .............: Seitenfläche
- a ...............................: Abstand
- b₁, B₁, B₂ ..................: Breite
- d₁..............................: Dicke
- E...............................: Mittelebene
- E^{II}.............................: Ebene
- h₁ ..............................: Höhe
- l₁, l₂ ..........................: Erstreckungslänge
- α, β ...........................: Winkel

## Patentansprüche

1. Fahrzeugluftreifen mit einem Laufstreifen mit auf Profiltiefe ausgeführten Rillen (1), beispielsweise Umfangsrillen (1), Schrägrillen oder Querrillen, welche jeweils durch einen Rillengrund (1a) und zwei Rillenflanken (1b) begrenzt sind, wobei in zumindest einer Rille (1) am Rillengrund (1a) eine an beide Rillenflanken (1b) angebundene, einen Abriebindikator bildende Erhebung (2, 2^{I bis VI}) vorgesehen ist,
**dadurch gekennzeichnet,**
**dass** die Erhebung (2, 2^{I bis VI}) einen in Draufsicht und in Erstreckungsrichtung der Rille (1) aufrecht H-förmigen, seitliche Schenkel und einen diese verbindende Verbindungsschenkel aufweisenden Indikatorteil (3, 3^{I}, 3^{II}, 3^{V}) aufweist, wobei die seitlichen Schenkel an die Rillenflanken (1b) angebunden sind und wobei der Verbindungsschenkel durch zwei in Draufsicht zueinander konkav gebogen verlaufende Verbindungsflächen (6, 6^{I}, 6^{V}) begrenzt ist.

2. Fahrzeugluftreifen nach Anspruch 1, **dadurch gekennzeichnet, dass** die Erhebung (2, 2^{I bis VI}) in Fortsetzung der seitlichen Schenkel der H-Form des Indikatorteiles (3, 3^{I}, 3^{II}, 3^{V}) paarweise verlaufende und in Richtung zum Rillengrund (1a) auslaufende Stützschenkeln (4, 4^{I}, 4^{III}) aufweist.

3. Fahrzeugluftreifen nach Anspruch 1 oder 2, **dadurch gekennzeichnet, dass** zumindest eine der Verbindungsflächen (6, 6^{I}, 6^{V}) des Verbindungsschenkels des H-förmigen Indikatorteiles (3, 3^{I}, 3^{II}, 3^{V}) in Draufsicht U-förmig verläuft.

4. Fahrzeugluftreifen nach Anspruch 1 oder 2, **dadurch gekennzeichnet, dass** zumindest eine der Verbindungsflächen (6, 6^{I}, 6^{V}) des Verbindungsschenkels des H-förmigen Indikatorteiles (3, 3^{I}, 3^{II}, 3^{V}) in Draufsicht kreisbogenförmig, insbesondere höchstens halbkreisförmig, verläuft

5. Fahrzeugluftreifen nach einem der Ansprüche 1 bis 4, **dadurch gekennzeichnet, dass** der H-förmige Indikatorteil (3, 3^{I}, 3^{II}, 3^{V}) eine mit der Mindestprofiltiefe korrelierende, insbesondere konstante Höhe (h₁) aufweist.

6. Fahrzeugluftreifen nach einem der Ansprüche 1 bis 5, **dadurch gekennzeichnet, dass** der Verbindungsschenkel des H-förmigen Indikatorteiles (3, 3^{I}, 3^{II}, 3^{V}) an seiner schmalsten Stelle, am Niveau des Rillengrundes (1a), in Erstreckungsrichtung der Rille (1) eine Dicke (d₁) von 5,0 mm bis 15,0 mm aufweist.

7. Fahrzeugluftreifen nach einem der Ansprüche 1 bis 6, **dadurch gekennzeichnet, dass** der H-förmige Indikatorteil (3, 3^{I}, 3^{II}, 3^{V}) bei jeder Rillenflanke (1b) in Erstreckungsrichtung der Rille (1) eine Erstreckungslänge (l₁) von 15,0 mm bis 40,0 mm aufweist.

8. Fahrzeugluftreifen nach einem der Ansprüche 1 bis 7, **dadurch gekennzeichnet**, die Stützschenkel (4, 4^{I}, 4^{III}) am Niveau des Rillengrundes (1a) und in Erstreckungsrichtung der Rille (1) eine Erstreckungslänge (l₂) aufweisen, welche 75% bis 150% der Erstreckungslänge (l₁) des Indikatorteiles (3, 3^{I}, 3^{II}, 3^{V}) bei der jeweiligen Rillenflanke (1b) entspricht.

9. Fahrzeugluftreifen nach einem der Ansprüche 1 bis 8, **dadurch gekennzeichnet, dass** zwischen den beiden Paaren von Stützschenkeln (4, 4^{I}, 4^{III}) ein bis zum H-förmigen Indikatorteil (3, 3^{I}, 3^{II}, 3^{V}) reichender Grundabschnitt (1'a, 1^{I}a, 1^{III}a, 1^{IV}ₐ) des Rillengrundes (1a) verläuft, welcher beim Anschluss des Indikatorteiles (3, 3^{I}, 3^{II}, 3^{V}) zu den Stützschenkeln (4, 4^{I}, 4^{III}) eine Breite (B₂) von 15% bis 45%, insbesondere von 20% bis 30%, der Breite (b₁) des H-förmigen Indikatorteiles (3, 3^{I}, 3^{II}, 3^{V}) zwischen den Rillenflanken (1b) aufweist.

10. Fahrzeugluftreifen nach einem der Anspruch 9, **dadurch gekennzeichnet, dass** zumindest einer der Grundabschnitte (1a, 1^{I}a) über seine Erstreckung eine konstante Breite (B₂) aufweist.

11. Fahrzeugluftreifen nach einem der Anspruch 9, **dadurch gekennzeichnet, dass** die Breite von zumindest einem der Grundabschnitte (1^{III}a) in Richtung zu den freien Enden der Stützschenkel (4^{III}) kontinuierlich abnimmt.

12. Fahrzeugluftreifen nach einem der Anspruch 9, **dadurch gekennzeichnet, dass** die Breite von zumindest einem der Grundabschnitte (1^{IV}a) in Richtung zu den freien Enden der Stützschenkel (4^{IV}) kontinuierlich zunimmt.

13. Fahrzeugluftreifen nach Anspruch 11 oder 12, **dadurch gekennzeichnet, dass** die Stützschenkel (4^{III}, 4^{IV}) rilleninnenseitig durch Seitenflächen (7^{III}, 7^{IV}) begrenzt sind, welche in Draufsicht zur Erstreckungsrichtung der Rille (1) unter einem Winkel (α, β) von bis zu 20°, insbesondere von 2° bis 10°, geneigt sind.

## Claims

1. Pneumatic vehicle tyre comprising a tread with grooves (1) formed to a profile depth, for example circumferential grooves (1), oblique grooves or transverse grooves, which are in each case delimited by a groove base (1a) and two groove flanks (1b), wherein an elevation (2, 2^{I to VI}), which adjoins the two flanks (1b) and forms an abrasion indicator, is provided on the groove base (1a) in at least one groove (1),
**characterized**
**in that** the elevation (2, 2^{I to VI}) has in plan view and in the direction of extent of the groove (1) an upright H-shaped indicator part (3, 3^{I}, 3^{II}, 3^{V}) having lateral legs and a connecting leg connecting the latter, wherein the lateral legs adjoin the groove flanks (1b) and wherein the connecting leg is delimited by two connecting areas (6, 6^{I}, 6^{V}) which in plan view run in a concavely arcuate manner in relation to one another.

2. Pneumatic vehicle tyre according to Claim 1, **characterized in that** the elevation (2, 2^{I to VI}) has as a continuation of the lateral legs of the H shape of the indicator part (3, 3^{I}, 3^{II}, 3^{V}) supporting legs (4, 4^{I}, 4^{III}) which run in pairs and run out in the direction of the groove base (1a).

3. Pneumatic vehicle tyre according to Claim 1 or 2, **characterized in that** at least one of the connecting areas (6, 6^{I}, 6^{V}) of the connecting leg of the H-shaped indicator part (3, 3^{I}, 3^{II}, 3^{V}) runs in a U-shaped manner in plan view.

4. Pneumatic vehicle tyre according to Claim 1 or 2, **characterized in that** at least one of the connecting areas (6, 6^{I}, 6^{V}) of the connecting leg of the H-shaped indicator part (3, 3^{I}, 3^{II}, 3^{V}) runs in the form of an arc, in particular at most the form of half a circle, in plan view.

5. Pneumatic vehicle tyre according to one of Claims 1 to 4, **characterized in that** the H-shaped indicator part (3, 3^{I}, 3^{II}, 3^{V}) has a height (h₁), in particular a constant height (h₁), that correlates with the minimum profile depth.

6. Pneumatic vehicle tyre according to one of Claims 1 to 5, **characterized in that** the connecting leg of the H-shaped indicator part (3, 3^{I}, 3^{II}, 3^{V}) has at its narrowest point, level with the groove base (1a), in the direction of extent of the groove (1) a thickness (d₁) of 5.0 mm to 15.0 mm.

7. Pneumatic vehicle tyre according to one of Claims 1 to 6, **characterized in that** the H-shaped indicator part (3, 3^{I}, 3^{II}, 3^{V}) has at each groove flank (1b) in the direction of extent of the groove (1) a length of extent (l₁) of 15.0 mm to 40.0 mm.

8. Pneumatic vehicle tyre according to one of Claims 1 to 7, **characterized in that** the supporting legs (4, 4^{I}, 4^{III}) have level with the groove base (1a) and in the direction of extent of the groove (1) a length of extent (l₂) that corresponds to 75% to 150% of the length of extent (l₁) of the indicator part (3, 3^{I}, 3^{II}, 3^{V}) at the respective groove flank (1b).

9. Pneumatic vehicle tyre according to one of Claims 1 to 8, **characterized in that** between the two pairs of supporting legs (4, 4^{I}, 4^{III}) there runs a groove portion (1'a, 1^{I}a, 1^{III}a, 1^{IV}a) of the groove base (1a) that reaches as far as the H-shaped indicator part (3, 31, 3^{II}, 3^{V}) and has at the connection of the indicator part (3, 3^{I}, 3^{II}, 3^{V}) to the supporting legs (4, 4^{I}, 4^{III}) a width (B₂) of 15% to 45%, in particular of 20% to 30%, of the width (b₁) of the H-shaped indicator part (3, 31, 3^{II}, 3^{V}) between the groove flanks (1b).

10. Pneumatic vehicle tyre according to one of Claim 9, **characterized in that** at least one of the base portions (1a, 1^{I}a) has a constant width (B₂) over its extent.

11. Pneumatic vehicle tyre according to one of Claim 9, **characterized in that** the width of at least one of the base portions (1^{III}a) decreases continuously in the direction of the free ends of the supporting legs (4^{III}) .

12. Pneumatic vehicle tyre according to one of Claim 9, **characterized in that** the width of at least one of the base portions (1^{IV}a) increases continuously in the direction of the free ends of the supporting legs (4^{IV}) .

13. Pneumatic vehicle tyre according to Claim 11 or 12, **characterized in that** the supporting legs (4^{III}, 4^{IV}) are delimited on the inner side of the groove by side areas (7^{III}, 7^{IV}) which in plan view are inclined in relation to the direction of extent of the groove (1) at an angle (α, β) of up to 20°, in particular of 2° to 10°.

## Revendications

1. Pneumatique de véhicule comprenant une bande de roulement pourvue de rainures (1) ménagées à une profondeur de profilé, par exemple des rainures circonférentielles (1), des rainures inclinées ou des rainures transversales, qui sont chacune délimitées par un fond de rainure (1a) et deux flancs de rainure (1b), une élévation (2, 2^{I à VI}), qui est reliée aux deux flancs de rainure (1b) et qui forme un indicateur d'usure, étant prévue dans au moins une rainure (1) au niveau du fond de rainure (la),
**caractérisé en ce que**
l'élévation (2, 2^{I à vI}) comporte une partie d'indicateur (3, 3^{I}, 3^{II}, 3^{V}) qui comporte des branches latérales verticales en forme de H en vue de dessus et dans la direction d'extension de la rainure (1) et une branche de liaison reliant celles-ci, les branches latérales étant reliées aux flancs de rainure (1b) et la branche de liaison étant délimitée par deux surfaces de liaison (6, 6^{I}, 6^{V}) qui sont concaves l'une vers l'autre en vue de dessus.

2. Pneumatique de véhicule selon la revendication 1, **caractérisé en ce que** l'élévation (2, 2^{I à VI}) comporte des branches de support (4, 4^{I}, 4^{III}) qui s'étendent par paires dans le prolongement des branches latérales de la forme en H de la partie d'indicateur (3, 3^{I}, 3^{II}, 3^{V}) et qui se projettent en direction du fond de rainure (1a) .

3. Pneumatique de véhicule selon la revendication 1 ou 2, **caractérisé en ce que** l'une au moins des surfaces de liaison (6, 6^{I}, 6^{V}) de la branche de liaison de la partie d'indicateur (3, 3^{I}, 3^{II}, 3^{V}) en forme de H s'étend en forme de U en vue de dessus.

4. Pneumatique de véhicule selon la revendication 1 ou 2, **caractérisé en ce que** l'une au moins des surfaces de liaison (6, 6^{I}, 6^{V}) de la branche de liaison de la partie d'indicateur (3, 3^{I}, 3^{II}, 3^{V}) en forme de H s'étend en arc de cercle, en particulier en demi-cercle maximum, en vue de dessus.

5. Pneumatique de véhicule selon l'une des revendications 1 à 4, **caractérisé en ce que** la partie d'indicateur (3, 3^{I}, 3^{II}, 3^{V}) en forme de H a une hauteur (h₁) particulièrement constante qui est corrélée à la profondeur de profilé minimale.

6. Pneumatique de véhicule selon l'une des revendications 1 à 5, **caractérisé en ce que** la branche de liaison de la partie d'indicateur (3, 3^{I}, 3^{II}, 3^{V}) en forme de H a en son point le plus étroit, au niveau du fond de rainure (1a), dans la direction d'extension de la rainure (1), une épaisseur (d₁) de 5,0 mm à 15,0 mm.

7. Pneumatique de véhicule selon l'une des revendications 1 à 6, **caractérisé en ce que** la partie d'indicateur (3, 3^{I}, 3^{II}, 3^{V}) en forme de H a pour chaque flanc de rainure (1b) dans la direction d'extension de la rainure (1) a une longueur d'extension (I₁) de 15,0 mm à 40,0 mm.

8. Pneumatique de véhicule selon l'une des revendications 1 à 7, **caractérisé en ce que** les branches de support (4, 4^{I}, 4^{III}) ont, au niveau du fond de rainure (1a) et dans la direction d'extension de la rainure (I), une longueur d'extension (I₂) qui correspond à un pourcentage de 75 % à 150 % de la longueur d'extension (I₁) de la partie d'indicateur (3, 3^{I}, 3^{II}, 3^{V}) pour le flanc de rainure respectif (1b) .

9. Pneumatique de véhicule selon l'une des revendications 1 à 8, **caractérisé en ce qu'**une portion de fond (1'a, 1^{I}a, 1^{III}a, 1^{IV}a) du fond de rainure (1a), laquelle va jusqu'à la partie d' indicateur (3, 3^{I}, 3^{II}, 3^{V}), s'étend entre les deux paires de branches de support (4, 4^{I}, 4^{III}) et a, lorsque la partie d'indicateur (3, 3^{I}, 3^{II}, 3^{V}) est raccordée aux branches de support (4, 4^{I}, 4^{III}) , une largeur (B₂) de 15 % à 45 %, en particulier de 20 % à 30 %, de la largeur (b₁) de la partie d'indicateur (3, 3^{I}, 3^{II}, 3^{V}) en forme de H entre les flancs de rainure (1b).

10. Pneumatique de véhicule selon l'une des revendication 9, **caractérisé en ce que** l'une au moins des portions de fond (1a, 1^{I}a) a une largeur constante (B₂) sur son extension.

11. Pneumatique de véhicule selon l'une des revendication 9, **caractérisé en ce que** la largeur de l'une au moins des portions de fond (1^{III}a) diminue de façon continue en direction des extrémités libres des branches de support (4^{III}).

12. Pneumatique de véhicule selon l'une des revendication 9, **caractérisé en ce que** la largeur de l'une au moins des portions de fond (1^{IV}a) augmente de façon continue en direction des extrémités libres des branches de support (4^{IV}).

13. Pneumatique de véhicule selon la revendication 11 ou 12, **caractérisé en ce que** les branches de support (4^{III}, 4^{IV}) sont délimitées du côté intérieur de la rainure par des surfaces latérales (7^{III}, 7^{IV}) qui sont inclinées en vue de dessus par rapport à la direction d'extension de la rainure (1) d'un angle (α, β) allant jusqu'à 20°, en particulier de 2° à 10°.
